# EUROPÄISCHE PATENTSCHRIFT

(11) **EP 0 916 900 B1**
(45) Veröffentlichungstag und Bekanntmachung des Hinweises auf die Patenterteilung: **27.03.2002**
(21) Anmeldenummer: 98121470.3
(22) Anmeldetag: 11.11.1998
(51) Int. Cl.: F24C 15/16, A21B 3/13, A21B 3/15

(54) **Herdbackblech**
Baking tin
Moule de boulangerie

(30) Priorität: 14.11.1997 DE 19750486
(43) Veröffentlichungstag der Anmeldung: 19.05.1999
(73) Patentinhaber: W.F. Kaiser u. CO. GMBH, D-65582 Diez/Lahn (DE)
(72) Erfinder: Bühn, Jürgen, 65549 Limburg (DE)
(74) Vertreter: Hennicke, Ernst Rüdiger,Dipl.-Ing.

(56) Entgegenhaltungen:
- CH-A- 127 234
- DE-A- 2 818 001
- DE-A- 3 929 632
- DE-U- 29 516 902
- FR-A- 1 041 050
- GB-A- 1 187 096
- GB-A- 1 414 643

## Beschreibung

Die Erfindung betrifft ein Herdbackblech für das Backen von kleinteiligen Backerzeugnissen, mit einem Formboden und einem den Formboden umgreifenden aufragenden Formrand, wobei das Backblech mit mindestens einer Schüttöffnung am Umfang des Backblechs für das gezielte Ausschütten des fertig gebackenen kleinteiligen Backguts versehen ist, die eine Öffnungsbreite aufweist, die kleiner ist als die Abmessung des Formbodens in seiner Quer- oder Längsrichtung, wobei die Schüttöffnung zwischen zwei sie seitlich begrenzenden, über die Bodenfläche aufragenden seitlichen Leitflächen des Formrandes gebildet ist, die in Ausschüttrichtung gegeneinander konvergieren.

Die zur Verwendung in Küchenherden bestimmten einteiligen Backbleche weisen üblicherweise eine etwa rechteckige Umrißform mit einem über den Formboden aufragenden niedrigen Formrand auf, der mit einer nach außen gerichteten horizontalen Randleiste versehen ist, die auch als Griffrand genutzt werden kann. Diese Herdbackbleche werden in großem Umfang auch zum Backen von kleinteiligen Backerzeugnissen, z.B. in Ausstechförmchen geformten Gebäckteilen verwendet, aber vielfach auch zum Aufbacken von im Lebensmittelhandel zumeist im Tiefkühlzustand backfertig vertriebenen Erzeugnissen, wie z.B. vorgebackenen Pommes frites, Kartoffel-Kroketten, Kartoffelbällchen, Teigwaren mit oder ohne Füllung. Auch werden die Herdbackbleche häufig zum Backen von Maronen verwendet.

Nach dem Backvorgang und nach Herausnahme des Herdbackblechs aus dem Backofen wird das noch heiße Backgut entweder mittels Pfannenwender od.dgl. entnommen oder aber durch Kippen des Backblechs von diesem ausgeschüttet, zumeist in eine Schüssel oder auf Teller u.dgl.. Dabei ist es zumeist unvermeidbar, daß ein Teil des kleinstückigen Heißbackguts neben das Aufnahmegefäß fällt, da dieses im Regelfall erheblich kleiner ist als die Breite und damit die Schüttbreite des Backblechs.

Aus der DE 295 16 902 U1 ist eine Vorrichtung zum Trocknen von Nahrungsmitteln in Form eines Behälters mit plattenförmigem Boden bekannt, auf dem ein stegartiger Rahmen angeordnet ist. Der Rahmen ist an einer seiner Querseiten mit einer Schüttöffnung versehen, die schmaler ist als die Abmessung der Vorrichtung in ihrer Querrichtung. Hierzu wird die Schüttöffnung zwischen zwei sie seitlich begrenzenden, über die Bodenfläche aufragenden seitlichen Leitflächen des Formrandes gebildet, die in Ausschüttrichtung gegeneinander konvergieren. Bei diesem bekannten Blech führt bereits ein geringfügiges Kippen des Bodens aus der Horizontalen in Richtung auf die Schüttöffnung dazu, daß auf dem Boden liegende Erzeugnisse aus der Schüttöffnung rutschen, was bei einer unachtsamen Handhabung eines heißen Bleches schnell zu einem unbeabsichtigten Herabfallen der Erzeugnisse vom Blech führen kann.

Nachteilig bei der bekannten, backblechartigen Vorrichtung ist es auch, daß sie wie auch andere gebräuchliche Herdbackbleche einen Flachboden aufweist, was vor allem beim Aufbacken von backfertig vorbereiteten Verzehrerzeugnissen, wie z.B, die genannten Pommes frites, Kroketten, oftmals zu unbefriedigenden Backergebnissen führt.

Aufgabe der Erfindung ist es vor allem, ein Herdbackblech der eingangs genannten Art so zu verbessern, daß es sich beim Ausschütten der fertig gebackenen Backwaren leichter handhaben läßt und beim Backen von kleinteiligen Erzeugnissen für ein besseres Backergebnis sorgt, ohne daß es hierbei unbedingt erforderlich ist, das Backgut während des Backvorganges mehrfach zu wenden.

Diese Aufgabe wird erfindungsgemäß dadurch gelöst, daß der Formboden an der Schüttöffnung unter Bildung einer Schüttfläche in Schüttrichtung schräg nach oben ansteigend ausgebildet ist und sich die seitlichen Leitflächen etwa über die Länge der ansteigenden Schüttfläche erstrecken, mit der oberen Begrenzung des Formrandes abschließen und mit abnehmender Höhe zu der geneigten Schüttfläche an deren freien Stirnkante auslaufen und daß der Formboden auf seiner Oberseite mit über seine Bodenfläche verteilt und im Abstand zueinander angeordneten Bodenerhebungen, wie insbesondere Rippen oder Nocken, sowie mit über seine Bodenfläche verteilt angeordneten, vorzugsweise an den Bodenerhebungen angeordneten, feinen Bodenlöchern versehen ist.

Das erfindungsgemäße Herdbackblech, das, wie üblich, eine etwa rechteckige oder auch quadratische Gestaltung mit einem aufragenden Formrand aufweisen kann, weist mindestens eine Schüttöffnung auf, die so ausgebildet und gestaltet ist, daß das kleinteilige Backgut auch im Heißzustand gezielt vom Backblech ausgetragen bzw. ausgeschüttet werden kann, und zwar bevorzugt in ein Aufnahmegefäß oder auf Teller, dessen bzw. deren Größe erheblich kleiner sein kann als die Abmessungen des Backblechs. Damit lassen sich beispielsweise auf dem Backblech aufgebackene Pommes-frites problemlos in ein Serviergefäß schütten oder auf mehrere Teller verteilen, ohne daß es hierbei zu einem Verschütten der Pommes frites kommt, wozu die Schüttöffnung des Herdbackbleches die gegenüber seinen Abmessungen verhältnismäßig kleine Öffnungsbreite aufweist.

Die Schüttöffnung ist am Umfang des Backblechs angeordnet, so daß das Backgut durch einfaches Kippen des Backblechs durch die Schüttöffnung gezielt entleert werden kann. Dabei ist die Anordnung so getroffen, daß die Schüttöffnung zwischen zwei sie seitlich begrenzenden, über die Bodenfläche aufragenden Leitflächen des Backblech-Formrandes gebildet ist, wobei diese aufragenden seitlichen Leitflächen in Ausschüttrichtung gegeneinander konvergieren, so daß sie das kleinteilige Backgut beim Kippen des Backblechs zu einem Schüttstrom an der Schüttöffnung zusammenführen, der gezielt in ein Aufnahmegefäß oder auf Teller geführt werden kann, ohne daß es zu einem Verschütten des Backguts kommt. Der Formboden des Backblechs ist an der Schüttöffnung unter Bildung einer Schüttfläche in Schüttrichtung schräg nach oben ansteigend ausgebildet, wobei sich die beiden seitlichen Leitflächen etwa über die Länge dieser ansteigenden Schüttfläche erstrecken und an der freien Stirnkante der nach außen ansteigenden Schüttfläche auslaufen. Um insbesondere beim Aufbacken der in vielfacher Form im Handel zumeist tiefgekühlt backfertig angebotenen Erzeugnisse verbesserte Backergebnisse zu erzielen und vor allem auch das mehrfache Wenden des Backguts während des Aufbackvorgangs zu vermeiden oder zumindest zu erleichtern, ist bei dem erfindungsgemäßen Herdbackblech der Formboden auf seiner Oberseite mit über seine Bodenfläche verteilt mit Abstand zueinander angeordneten Bodenerhebungen, wie insbesondere Nocken, Rippen, versehen, die am Formboden des Backblechs angeformt werden können. Diese Bodenerhebungen, die zweckmäßig eine Höhe von 2-6mm, vorzugsweise 3-5mm, aufweisen, dienen der Auflage des Backguts auf dem Backblech und führen zu einer Vergleichmäßigung des Aufbackvorgangs und damit zu verbesserten Backergebnissen, können zugleich aber auch das Wenden des Backguts während des Aufbackens unterstützen. Zugleich ist am Formboden des Backblechs über die Bodenfläche verteilt eine Lochung vorgesehen, deren Löcher einen Durchmesser von etwa 3-5mm aufweisen können und die zweckmäßig an den Bodenerhebungen des Formbodens angeordnet werden. Auch hiermit wird erreicht, daß die Backhitze bzw. die heiße Backluft beim Backvorgang gleichmäßiger über die Fläche des kleinteiligen Backguts zur Wirkung kommt, was zu einer Verbesserung des Backvorgangs führt.

Es besteht erfindungsgemäß auch die Möglichkeit, das Backblech an seinem Umfang mit mehreren Schüttöffnungen der genannten Art zu versehen, vorzugsweise mit zwei Schüttöffnungen, die auf den gegenüberliegenden Seiten des Formbodens am Backblech angeordnet sind. Damit ist es möglich, das mit dem fertigen Backgut im Backofen entnommene heiße Backblech je nach den Gegebenheiten entweder zur einen oder anderen Seite hin durch Kippen zu entleeren. Vorzugsweise weisen dabei die Schüttöffnungen unterschiedliche öffnungsbreiten auf. Über die in der Öffnungsbreite voneinander abweichenden Schüttöffnungen lassen sich daher Aufnahmegefäße unterschiedlicher Größen gezielt mit dem Backgut befüllen.

Andererseits besteht nach der Erfindung aber auch die Möglichkeit, am Umfangsrand des Backblechs mindestens eine Schüttöffnung vorzusehen, die durch ein über den Formboden aufragendes Verschlußstück verschließbar ist, das zur Freigabe der Schüttöffnung aus der Schließposition entfernt werden kann, wobei das Verschlußstück zweckmäßig aus einer dem festen Formrand des Backblechs angepaßten Formrandleiste besteht. Das Verschlußstück, das in seinem Schließzustand die Schüttöffnung am Umfang des Backblechs verschließt, kann nach Art eines Schiebers ausgebildet sein, der an einer Schieberführung des Backblechs quer zur Ausschüttrichtung verschiebbar geführt ist. Dies bietet die Möglichkeit, durch eine Handeinstellung des Verschlußschiebers die Öffnungsbreite der Schüttöffnung am Randumfang des Backblechs, insbesondere in Anpassung an die Größe des Aufnahmegefäßes, in das das Backgut vom Backblech entleert wird, einzustellen. Andererseits kann das Verschlußstück aber auch von einer Verschlußklappe gebildet sein, die höhenverschwenkbar am Backblech, vorzugsweise an der Unterseite seines Formbodens, so gelagert ist, daß sie von der Schließposition, in der sie die Schüttöffnung verschließt, in eine Schwenklage gebracht werden kann, in der die Schüttöffnung für das Ausschütten des Backguts geöffnet ist, wobei die Verschlußklappe in der Schließposition lösbar verriegelbar ist, vorzugsweise mittels einer einfachen Feder-Rastverbindung od.dgl.. Die Verschlußklappe kann auch aus mehreren Teilabschnitten bestehen, die sich jeweils über eine Teilbreite der Schüttöffnung erstrecken und unabhängig voneinander von der Schließposition in die Öffnungsposition schwenkbar sind, so daß auch in diesem Fall sich die Öffnungsbreite der Schüttöffnung am Umfang des Herdbackblechs einstellen läßt.

Weitere vorteilhafte Gestaltungsmerkmale der Erfindung sind in den einzelnen Ansprüchen angegeben und ergeben sich aus der nachfolgenden Beschreibung der in der Zeichnung gezeigten Ausführungsbeispiele. In der Zeichnung zeigen:
- Fig. 1: ein erfindungsgemäßes Herdbackblech in perspektivischer Darstellung in einer Ansicht schräg von oben;
- Fig. 2: das Backblech nach Fig. 1 in einem vertikalen Längsschnitt nach Linie II-II der Fig. 1;
- Fig. 3: eine Teilansicht auf den Formboden des Backblechs nach den Fig. 1 und 2 mit den hier angeordneten Bodenerhebungen;
- Fig. 4: in der Teilansicht nach Fig. 3 eine geänderte Ausführungsform der am Formboden angeformten Bodenerhebungen;
- Fig. 5: ein weiteres Ausführungsbeispiel eines erfindungsgemäßen Herdbackblechs in einer Ansicht von oben mit zwei am Umfang gegenüberliegend angeordneten Schüttöffnungen;

Die in der Zeichnung dargestellten Herdbackbleche 1 sind, wie bekannt, als flache, in der Umrißform etwa rechteckige Backbleche mit gerundeten Eckbereichen ausgeführt und bestehen zweckmäßig aus Blechformteilen, wobei sie auf der Oberseite ihres Formbodens 2 mit einem Antihaftbelag, z.B. einem Teflonbelag, beschichtet sein können. Sie weisen am Außenumfang ihres Formbodens 2 einen über die Bodenebene aufragenden Formrand 3 auf, dessen Höhe zweckmäßig etwa 20-30mm beträgt und der an seiner Oberseite mit einer nach außen weisenden, etwa horizontalen flanschartigen Randleiste 4 versehen ist, die eine Griffleiste bzw. einen Griffrand bilden kann.

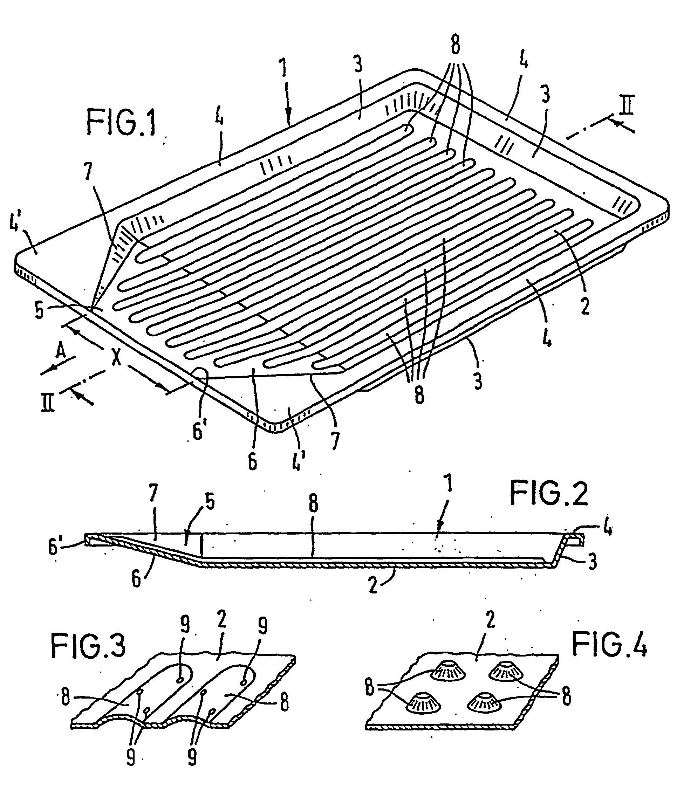

Das in den Fig. 1 bis 3 gezeigte Herdbackblech 1 weist an seinem etwa rechteckigen Außenumfang eine Schüttöffnung 5 auf, die sich an der schmaleren Rechteckseite des Backblechs befindet und deren Öffnungsbreite X erheblich kleiner ist als die Breite des Backblechs an dieser Seite und demgemäß auch als die Abmessung des Formbodens 2 quer zur Ausschüttrichtung, mit der das auf dem Formboden 2 aufgebackene kleinteilige Backgut nach Herausnahme des Backblechs aus dem Backofen von dem Backblech ausgeschüttet wird. Diese Ausschüttrichtung ist durch den Pfeil A angegeben. Wie die Fig. 1 und 2 zeigen, ist auf der Breite X der Schüttöffnung 5 der aufragende Formrand 3 mit seiner nach außen weisenden Randleiste 4 unterbrochen. Dabei wird die Schüttöffnung 5 von einer Bodenverlängerung 6 des Formbodens gebildet, die in Ausschüttrichtung A gegenüber der Bodenebene des Formbodens 2 ansteigend ausgeführt ist, vorzugsweise unter einem flachen Winkel von etwa 10-20°. An ihren beiden gegenüberliegenden Seiten wird die Bodenverlängerung 6 durch bis zur Oberseite des Formrandes 3 ansteigende seitliche Führungs- bzw. Leitflächen 7 begrenzt, die in Ausschüttrichtung A gegeneinander konvergieren und an der freien Stirnkante 6' der ansteigenden Bodenverlängerung 6 flach auslaufen. Die über die Oberseite der Bodenverlängerung 6 aufragenden Leitflächen 7 sind außerdem zur Vertikalen schräg nach oben geneigt, wie dies Fig. 1 erkennen läßt. Mit der Anordnung der beiden sich über die Länge der Bodenverlängerung 6 zu deren beiden Seiten erstreckenden Leitflächen 7 erhält die Schüttöffnung 5 an ihrer freien Stirnkante 6' zwischen den Leitflächen eine Öffnungsbreite X, die erheblich kleiner ist"als die Abmessung des Formbodens 2 und des Backblechs quer zur Ausschüttrichtung A. Die Schüttöffnung 5 liegt an der freien Stirnkante 6' in der Höhe der das Backblech bis auf den Bereich der Schüttöffnung umschließenden Randleiste 4. Wie Fig. 1 zeigt, ist die dreiseitig um das Backblech umlaufende horizontale Randleiste 4 auf der Seite der Schüttöffnung 5 in den zu deren beiden Seiten befindlichen Winkelbereichen etwa dreieckförmig verbreitert, wobei sie zur Innenseite der Schüttöffnung hin durch die zur Stirnkante 6' abfallenden Leitflächen 7 begrenzt wird. Diese beiderseits der Schüttöffnung befindlichen verbreiterten Bereiche 4' der Randleiste 4 bilden hier Grifflächen für die Handhabung des Backblechs.

Bei dem in den Fig. 1 bis 3 gezeigten Ausführungsbeispiel weist das Herdbackblech 1 einen profilierten Formboden mit nach oben gerichteten Bodenerhebungen 8 auf, die hier aus parallel zueinander verlaufenden, aus dem Bodenblech nach oben herausgedrückten flachen Sicken bestehen, die sich im wesentlichen über die gesamte Länge des Formbodens 2 erstrecken und, wie vor allem Fig. 3 zeigt, an ihrer Oberseite leicht gerundet sind. Die Höhe der Bodenerhebungen 8 beträgt zweckmäßig etwa 1-3mm, vorzugsweise etwa 2mm. Die von den parallelen sicken- oder rippenartigen Ausformungen des Formbodens 2 gebildeten Bodenerhebungen 8 weisen quer zu ihrer Längsrichtung eine Breite auf, die zweckmäßig größer ist als ihr Seitenabstand, so daß zwischen den parallelen Bodenerhebungen 8 in deren Längsrichtung verlaufende schmale Bodenvertiefungen gebildet werden, deren Breite erheblich kleiner ist als diejenige der Bodenerhebungen 8. Die Bodenerhebungen 8 verlaufen in Längsrichtung des Formbodens im wesentlichen über dessen gesamte Länge und auch zumindest angenähert über die Länge der sich an den horizontalen Formboden in Ausschüttrichtung anschließenden Bodenverlängerung 6.

Ferner weist das Herdbackblech nach den Fig. 1 bis 3 eine Vielzahl von über seine Bodenfläche verteilt angeordneten kleinen Bodenöffnungen 9 auf, die zweckmäßig einen Durchmesser von etwa 3-5mm auf weisen und die, wie Fig. 3 zeigt, an den Bodenerhebungen 8 angeordnet sind, zweckmäßig an deren Seitenflanken. Es ist im übrigen erkennbar, daß mit den sickenförmig angeformten parallelen Bodenerhebungen 8 der Formboden 2 in seiner Querrichtung eine angenähert gewellte Profilierung erhält. Das mit dem profilierten Boden versehene Herdbackblech nach den Fig. 1 bis 3 kann mit besonderem Vorteil für das Aufbacken von vorgebackenen Pommes frites verwendet werden, die dabei im tiefgekühlten Zustand auf den Formboden 2 geschüttet werden, so daß sie sich mehr oder weniger regellos über den Formboden 2 in Ablage auf die Bodenerhebungen 8 verteilen, wodurch sich eine den Backvorgang unterstützende lockere Verteilung der Pommes frites ergibt, die in Verbindung mit den den Formboden durchdringenden kleinen Bodenlöchern 9 zu einer weitgehend gleichmäßigen Bräunung der Pommes frites führt. Nach erfolgtem Aufbacken der Pommes frites kann das mit diesen beladene Herdbackblech 1 dem Backofen entnommen werden, worauf die noch heißen Pommes frites in ein Gefäß oder einen Teller durch Kippen des Backblechs ausgeschüttet werden. Es ist ersichtlich, daß beim Kippen des Herdbackblechs 1 die aufliegende Pommes-frites-Masse oder ein sonstiges aufgebackenes kleinteiliges Backgut durch die umfangsseitige Schüttöffnung 5 über die hier ansteigende Bodenverlängerung 6 zwischen den seitlichen Leitflächen 7 zu einem Schüttstrom zusammengeführt wird, dessen Breite der Öffnungsbreite X entspricht, wobei der an der Stirnkante 6' austretende Schüttstrom in ein Aufnahmegefäß, z.B. eine Schüssel, oder auf einen Teller zielgerecht abgeworfen werden kann. Die angeformten rippenartigen Bodenerhebungen 8 können hierbei ebenfalls eine Leitfunktion beim Ausschütten des kleinteiligen Backguts ausüben.

Es versteht sich, daß die am Formboden 2 und zweckmäßig auch an dessen Bodenverlängerung 6 angeordneten Bodenerhebungen 8 in ihrer Form und Größe unterschiedlich ausgeführt werden können. Fig. 4 zeigt eine Anordnung, bei der die Bodenerhebungen 8 von am Formboden 2 angeformten, in dichtem Abstand zueinander angeordneten nockenartigen Ausformungen gebildet werden, die sich zu ihrer Oberseite hin verjüngen, wobei auch hier am Formboden 2, zweckmäßig an diesen nockenartigen Bodenerhebungen 8, die Bodenlöcher 9 vorgesehen werden können. Diese nockenartige Profilierung des Formbodens 2 empfiehlt sich insbesondere dann, wenn auf dem Herdbackblech 1 Rundteile, z.B. etwa zylindrische Kroketten, aufgebacken werden, die dabei sich im wesentlichen in Auflage auf den dicht zueinander angeordneten nockenartigen Erhebungen 8 befinden und die das Wenden des Backguts während des Aufbackvorgangs erleichtern, indem sie das Backgut bei einer leichten Rüttelbewegung des Backblechs in der hierdurch bedingten veränderten Lage halten.

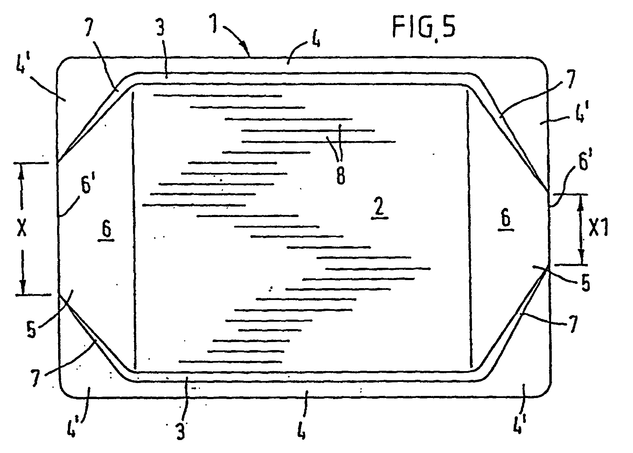

Fig. 5 zeigt ein Herdbackblech 1, das sich von demjenigen nach den Fig. 1 bis 4 nur dadurch unterscheidet, daß es an seinen beiden parallel einander gegenüberliegenden Backblechseiten jeweils eine Schüttöffnung 5 in der beschriebenen Ausführung aufweist, wobei hier die eine Schüttöffnung 5 eine Öffnungsbreite X1 hat, die kleiner ist als die Öffnungsbreite X der anderen Schüttöffnung 5 des Herdbackblechs. In der Gestaltung entsprechen im übrigen die beiden Schüttöffnungen 5 des Herdbackblechs nach Fig. 5 der im Zusammenhang mit den Fig. 1 und 2 beschriebenen Schüttöffnung.

Es versteht sich, daß sich bei allen vorstehend beschriebenen Ausführungsformen des Herdbackblechs an dessen Formboden 2 über die Bodenfläche verteilt Bodenerhebungen 8, insbesondere solche in der Ausführung nach den Fig. 3 und 4, vorsehen lassen, aber auch hiervon abweichende Gestaltungsformen der Bodenerhebungen. Auch werden zweckmäßig die über die Bodenfläche verteilten Bodenöffnungen 9 vorgesehen.

Das erfindungsgemäße Herdbackblech kann, wie üblich, aus einem Formblechteil bestehen, bei dem der Formboden 2 und der Formrand 3 mit der Randleiste 4 in einem Stück verbunden sind, wobei an dem Formteil auch die in Verbindung mit den Fig. 1, 2 und 5 gezeigten Schüttöffnungen angeformt werden können. Für die Herstellung des Herdbackblechs können, wie üblich, Stahlbleche verwendet werden. Es besteht aber auch die Möglichkeit, das erfindungsgemäße Herdbackblech aus Aluminium herzustellen. Auch kann das Herdbackblech aus einem metallenen Lochblech"oder einem metallenen Sieb- oder Gewebeblech durch formgebende Bearbeitung desselben hergestellt werden.

Es versteht sich, daß die Erfindung auf die beschriebenen Ausführungsbeispiele nicht beschränkt ist, diese vielmehr in verschiedenen Einzelheiten Änderungen erfahren können, ohne den Rahmen der Erfindung zu verlassen. Das mit einer oder mit mehreren Schüttöffnungen versehene erfindungsgemäße Backblech läßt sich ersichtlich auch zum Backen von großstückigen Backerzeugnissen, wie Kuchen, Pizzen verwenden, weist aber für das Backen vom kleinteiligen Backerzeugnissen besondere Handhabungsvorteile auf.

## Patentansprüche

1. Herdbackblech (1) für das Backen von kleinteiligen Bäckerzeugnissen, mit einem Formboden (2) und einem den Formboden umgreifenden aufragenden Formrand (3), wobei das Backblech mit mindestens einer Schüttöffnung (5) am Umfang des Backblechs für das gezielte Ausschütten des fertig gebackenen kleinteiligen Backguts versehen ist, die eine Öffnungsbreite (X, X1) aufweist, die kleiner ist als die Abmessung des Formbodens in seiner Quer- oder Längsrichtung, wobei die Schüttöffnung (5) zwischen zwei sie seitlich begrenzenden, über die Bodenfläche (6) aufragenden seitlichen Leitflächen (7) des Formrandes (3) gebildet ist, die in Ausschüttrichtung (Pfeil A) gegeneinander konvergieren **dadurch gekennzeichnet, daß** der Formboden (2) an der Schüttöffnung (5) unter Bildung einer Schüttfläche (6) in Schüttrichtung (Pfeil A) schräg nach oben ansteigend ausgebildet ist und sich die seitlichen Leitflächen (7) etwa über die Länge der ansteigenden Schüttfläche (6) erstrecken, mit der oberen Begrenzung des Formrandes (3) abschließen und mit abnehmender Höhe zu der geneigten Schüttfläche (6) an deren freien Stirnkante (6') auslaufen und daß der Formboden auf seiner Oberseite mit über seine Bodenfläche verteilt und im Abstand zueinander angeordneten Bodenerhebungen (8), wie insbesondere Rippen oder Nocken, sowie mit über seine Bodenfläche verteilt angeordneten, vorzugsweise an den Bodenerhebungen (8) angeordneten, feinen Bodenlöchern versehen ist.

2. Herdbackblech nach Anspruch 1, **dadurch gekennzeichnet, daß** die Öffnungsbreite der Schüttöffnung (5) durch Handbetätigung eines Verschlußelements einstellbar ist.

3. Herdbackblech nach Anspruch 1 oder 2, **dadurch gekennzeichnet, daß** die freie Stirnkante (6') der ansteigenden Schüttfläche (6) in der Höhe der Oberseite des festen Formrandes (3) angeordnet ist.

4. Herdbackblech nach einem der Ansprüche 1 bis 3, **dadurch gekennzeichnet, daß** es an seinem Umfang zwei, vorzugsweise auf den gegenüberliegenden Seiten des Formbodens (2) angeordnete Schüttöffnungen (5) aufweist.

5. Herdbackblech nach Anspruch 4, **dadurch gekennzeichnet, daß** die beiden Schüttöffnungen (5) unterschiedliche Öffnungsbreiten (X, X1) aufweisen.

6. Herdbackblech nach einem der Ansprüche 1 bis 5, **dadurch gekennzeichnet**, d a ß es an der Oberseite seines über den Formboden (2) aufragenden Formrandes (3) eine horizontal nach außen gerichtete Randleiste (4) aufweist, die in den Eckbereichen des etwa reckteckigen Backblechs (1) über die Länge der Leitflächen (7) verbreiterte Griffleisten bilden.

7. Herdbackblech nach einem der Ansprüche 1 bis 6, **dadurch gekennzeichnet, d a ß** die an seinem Umfang angeordnete Schüttöffnung (5) durch ein über den Formboden (2) aufragendes Verschlußstück (10) verschließbar ist, das zur Freigabe der Schüttöffnung (5) aus der Schließposition entfernbar ist.

8. Herdbackblech nach Anspruch 7, **dadurch gekennzeichnet, daß** das Verschlußstück (10) aus einer dem festen Formrand (3) angepaßten Formrandleiste besteht.

9. Herdbackblech nach Anspruch 7 oder 8, **dadurch gekennzeichnet, daß** das Verschlußstück (10) von der Schließposition in die öffnungsposition und umgekehrt höhenverschwenkbar am Backblech gelagert und in der aufgeschwenkten Schließposition, z.B. durch eine Feder-Rastverbindung (13, 14), verriegelbar ist.

10. Herdbackblech nach Anspruch 9, **dadurch gekennzeichnet, daß** das Verschlußstück (10) an der Unterseite des Formbodens (2) in einem Scharnier (12) höhenverschwenkbar gelagert ist.

11. Herdbackblech nach Anspruch 9 oder 10, **dadurch gekennzeichnet, d a ß** das Verschlußstück (10) in der Abschwenklage eine Verlängerung der Schüttfläche des Formbodens (2) bildet.

12. Herdbackblech nach Anspruch 7 oder 8, **dadurch gekennzeichnet, d a ß** das Verschlußstück (12) nach Art eines Schiebers an einer Schieberführung des Backblechs geführt zwischen Schließ- und Öffnungsposition beweglich ist.

13. Herdbackblech nach einem der Ansprüche 1 bis 12, **dadurch gekennzeichnet, daß** es mit einer Antihaftbeschichtung versehen ist.

14. Herdbackblech nach einem der Ansprüche 1 bis 13, **dadurch gekennzeichnet, daß** es aus einem Formkörper aus Stahlblech, Aluminium oder einem Loch- oder Siebblech besteht.

## Claims

1. Oven baking sheet (1) for baking small-sized baked products, comprising a shaped bottom (2) and a shaped edge (3) extending vertically upward from and cicumferentially engaging the former, said baking sheet exhibiting at least one discharge opening (5) on its circumference for discharging the fully baked small-sized baking products in a targeted manner, wherein said discharge opening (5) has an opening width (X, X1) that is smaller than the transverse or longitudinal dimension of the shaped bottom and is formed between two lateral guide surfaces (7) of the shaped edge (3) which project upwardly from the bottom surface (6) and define said discharge opening laterally while converging towards each other in the discharge direction (arrow A), **characterized in that** the shaped bottom (2) slants upwards in the discharge direction (arrow A) near the discharge opening (5), thus forming a discharge surface (6), and that the lateral guide surfaces (7) extend approximately along the length of this upwardly slanted discharge surface (6), terminate flush with the top boundary line of the shaped edge (3), and descend with decreasing height toward the slanted discharge surface (6) at its free front edge (6') so as to terminate therewith, and that the shaped bottom, on its top side, exhibits a plurality of interspaced projections (8) such as ribs or cams which are distributed over its surface area, in addition to comprising a plurality of fine orifices distributed over its surface area and arranged preferably at said projections (8).

2. Oven baking sheet according to claim 1, **characterized in that** the opening width of the discharge opening (5) is adjustable my manually actuating a closing member.

3. Oven baking sheet according to claim 1 or claim 2, **characterized in that** the free front edge (6') of the upwardly slanting discharge surface (6) is located on a level with the top of the fixed shaped edge (3).

4. Oven baking sheet according to any of claims 1 through 3, **characterized in that** it comprises two discharge openings (5) on its circumerence, such openings being preferably arranged at opposite sides of the shaped bottom (2).

5. Oven baking sheet according to claim 4, **characterized in that** said two discharge openings (5) have different opening widths (X, X1.)

6. Oven baking sheet according to any of claims 1 through 5, **characterized in that** at the top of its shaped edge (3) projecting upwardly from the shaped bottom (2), it exhibits an edge strip (4) extending outwardly in the horizontal direction, such edge strips forming elongated grip handles widening out over the length of the guide surfaces (7) it the corner areas of the approximately rectangular baking sheet.

7. Oven baking sheet according to any of claims 1 through 6, **characterized in that** the discharge opening (5) on its circumference can be closed off with a closing member (10) which projects above the shaped bottom (2) and can be moved out of its closing position to clear the discharge opening (5)

8. Oven baking sheet according to claim 7, **characterized in that** said closing member (10) consists of a shaped edge strip (3) matching the contours of the shaped edge (3).

9. Oven baking sheet according to claim 7 or 8, **characterized in that** said closing member (10) is secured to the baking sheet by hinged attachment, allowing it to be swung up and down from its closed to its open position and vice versa, and that it can be locked in its fully raised (closed) hinge position, e.g., by means of a spring-loaded snap fit connection (13, 14).

10. Oven baking sheet according to claim 9, **characterized in that** the closing member (10) is secured to the underside of the shaped bottom (2) via a hinge (12) allowing it to be swung up and down.

11. Oven baking sheet according to claims 9 or 10, **characterized in that** the closing member (10), when in its fully lowered hinge position, forms an extension of the discharge surface of the shaped bottom (2).

12. Oven baking sheet according to claim 7 or 8, **characterized in that** the the closing member (12) is guided in the manner of a slide gate in a slide-guide device of the baking sheet, whereby it can be moved between a closed and an open position.

13. Oven baking sheet according to any of claims 1 through 12, **characterized in that** it carries an anti-stick coating.

14. Oven baking sheet according to any of claims 1 through 13, **characterized in that** it consists of a shaped steel or aluminium body, or of a perforated or screen-type sheet metal.

## Revendications

1. Moule de boulangerie (1) pour cuire des produits de boulangerie de petite taille avec un fond profilé (2) et avec un bord profilé (3) entourant le fond profilé, où le moule de boulangerie comprend au moins une ouverture de versement (5) située à la circonférence du moule pour le versement ajusté des produits de boulangerie de petite taille en fin de cuisson, laquelle comprend une largeur d'ouverture (X, X1), qui est plus petite que les dimensions du fond profilé dans sa longueur ou sa largeur, où l'ouverture de versement (5) est formée entre deux surfaces de guidage (7) du bord profilé (3) s'élevant au dessus de la surface de fond (6) qui convergent dans la direction du versement (flèche A), **caractérisé en ce que** le fond profilé (2) est formé auprès de l'ouverture de versement (5) en formant une surface de versement (6) dans la direction du versement (flèche A) en montant d'une façon inclinée vers le haut et **en ce que** les surfaces de guidage (7) s'étendent le long de la surface de versement (6) montante, qui se terminent avec la bordure supérieure du bord profilé (3) et qui finissent avec l'hauteur diminuant par rapport à la surface de versement (6) au bord libre (6') et **en ce que** le fond profilé comprend des élévations (8) sur sa surface supérieure et distribuées sur sa surface de fond et dans une distance commune, comme des nervures ou des saillies, et qui comprend des trous fins distribués sur sa surface de fond et préférablement sur les élévations (8).

2. Moule de boulangerie suivant la revendication 1, **caractérisé en ce que** la largeur d'ouverture (X, X1) de l'ouverture de versement (5) est adjustable par actuation manuelle d'un élément de fermeture.

3. Moule de boulangerie suivant la revendication 1 ou 2, **caractérisé en ce** le bord libre (6') de la surface de versement (6) montante est situé à l'hauteur de la face supérieure du bord profilé (3).

4. Moule de boulangerie suivant l'une des revendications 1 à 3, **caractérisé en ce qu'**elle comprend le long de sa circonférence deux ouvertures de versement (5) situées préférablement diamétralement opposé du fond profilé (2).

5. Moule de boulangerie suivant la revendication 4, **caractérisé en ce que** les deux ouvertures de versement (5) comprennent des largeurs d'ouverture (X, X1) différentes.

6. Moule de boulangerie suivant l'une des revendications 1 à 5, **caractérisé en ce qu'**il comprend à sa surface supérieure du bord profilé (3) un rebord (4) dirigé vers l'extérieur formant dans les régions des coins du moule (1) rectangulaire au dessus du long des surfaces de guidage (7) des rebords de manutention élargis.

7. Moule de boulangerie suivant l'une des revendications 1 à 6, **caractérisé en ce** l'ouverture de versement (5) prévue à la circonférence peut être fermée par un obturateur (10) s'étendant de la surface profilée (2) vers le haut et pouvant être retiré pour libérer l'ouverture de versement (5) de la position fermée.

8. Moule de boulangerie suivant la revendication 7, **caractérisé en ce que** l'obturateur (10) est constitué d'un profil de bordure qui est formé suivant le bord profilé (3).

9. Moule de boulangerie suivant la revendication 7 ou 8, **caractérisé en ce que** l'obturateur (10) est logé d'une manière à pouvoir pivoter dans sa hauteur de la position fermée à sa position ouverte et vice versa et pouvoir être arrêté dans sa position fermée, p. e. par une connexion à ressort de cran d'arrêt.

10. Moule de boulangerie suivant la revendication 7 ou 8, **caractérisé en ce que** l'obturateur (10) est logé dans une articulation à la surface inférieure du fond profilé (2) d'une manière ajustable en hauteur par pivot.

11. Moule de boulangerie suivant la revendication 9 ou 10, **caractérisé en ce que** l'obturateur (10) forme dans sa position de pivot vers le bas une prolongation de la surface de versement du fond profilé (2).

12. Moule de boulangerie suivant la revendication 7 ou 8, **caractérisé en ce que** l'obturateur (10) peut être déplacé comme un coulisseau le long d'un guidage du moule entre une position ouverte et une position fermée.

13. Moule de boulangerie suivant l'une des revendications 1 à 12, **caractérisé en ce qu'**il est équipé d'un revêtement anti-adhésif.

14. Moule de boulangerie suivant l'une des revendications 1 à 13, **caractérisé en ce qu'**il consiste d'un corps profilé de tôle d'acier, d'aluminium ou d'une tôle perforée ou d'une toile de passoire.
